# EUROPEAN PATENT APPLICATION

(11) **EP 2 194 704 A2**
(43) Date of publication of application: **09.06.2010**
(21) Application number: 09014379.3
(22) Date of filing: 17.11.2009
(51) Int. Cl.: H04N 5/44, H04N 7/01

(54) **Video signal processing device and video signal processing method**

(30) Priority: 19.11.2008 JP 2008295472
(71) Applicant: NEC Electronics Corporation, Kawasaki, Kanagawa 211-8668 (JP)
(72) Inventor: Shao, Ming, Kawasaki Kanagawa 211-8668 (JP)
(74) Representative: Glawe, Delfs, Moll

(57) **Abstract**

To provide a video signal processing device and a video signal processing method capable, for progressive signals that are input after undergoing various conversion processes, of maintaining the quality of the output progressive signals at a fixed level. A video signal processing device in accordance with an exemplary aspect of the present invention includes a detection unit that detects the conversion history of an input progressive signal, and a signal restoration unit that re-converts a progressive signal according to a detection result detected by the detection unit. The signal restoration unit includes a conversion unit that re-converts an input progressive signal, and a selector that selects and outputs a progressive signal re-converted by the conversion unit and an input progressive signal according to a detection result of the detection unit.

## Description

### BACKGROUND

### 1. Field of the Invention

The present invention relates to a video signal processing device and a video signal processing method, in particular a video signal processing device and a video signal processing method capable of processing a progressive signal.

### 2. Description of Related Art

As for display modes of display devices such as television sets and monitors, there are two modes, i.e., progressive and interlace. Further, progressive signals and interlace signals are used as video signal formats corresponding to these display modes. Therefore, when input video data is interlace signals and the display mode of an output display device is a progressive mode, it is necessary to carry out an IP (Interlace-Progressive) conversion by a video signal processing device in order to conform the input video data to the display mode of the output display device (see Non-patent document 1 (Kenji Sugiyama, and Hiroya Nakamura, "A method of de-interlacing with motion compensated interpolation", IEEE Transactions on Consumer Electronics, Vol. 45, No. 3, pp. 611-616, August 1999)).

Meanwhile, Patent document 1 (Japanese Unexamined Patent Application Publication No. 2002-374504) discloses a video signal format reverse-conversion method and device in which when a progressive signal is converted into an interlace signal and then further converted into a progressive signal, the amount of the information contained in the original signal can be maintained and thus a high-quality video signal can be obtained.

Further, Patent document 2 (Japanese Unexamined Patent Application Publication No. 10-234009) discloses a receiving device that selects either an interlace signal or a progressive signal according to I/P identification information output from a decoder and outputs the selected signal. Furthermore, Patent document 3 (Japanese Unexamined Patent Application Publication No. 2001-36831) discloses a digital television signal receiving device that adds an identification signal to an output signal output from an IP conversion unit and switches the output according to the identification signal.

### SUMMARY

However, there is a problem that when video data in various video signal formats are converted or subjected to a similar process by an video signal processing device and output to a display device that displays images in the progressive formant, the quality of the output progressive signals cannot be maintained at a fixed quality level.

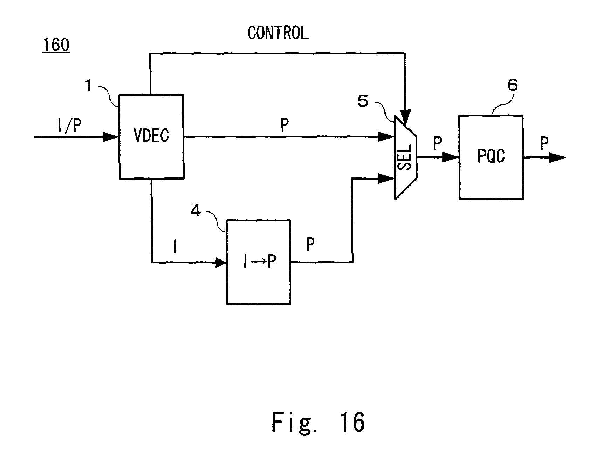

Fig. 16 shows a configuration of a video signal processing device 160 in accordance with the related art, and an exemplary object of the present invention is explained hereinafter with reference to the figure. The video signal processing device 160 receives either a progressive signal or an interlace signal, carries out predefined processing, and outputs the processed signal as a progressive signal.

The video signal processing device 160 includes a video decoder (VDEC) 1, an IP conversion unit 4, a selector 5, and an image-quality adjustment block 6. The video decoder 1 analyzes the attribute of an input signal, i.e., a video signal, and determines whether the input signal is an interlace signal or a progressive signal. Then, the video decoder 1 notifies the decision result to the selector 5 as a control signal.

When the video decoder 1 determines that the input signal is an interlace signal, the video decoder 1 starts up the IP conversion unit 4. The IP conversion unit 4 converts the input signal into a progressive signal and outputs the converted signal to the selector 5. Then, the selector 5 selects the signal converted by the IP conversion unit 4 according to a control signal from the video decoder 1, and outputs the selected signal to the image-quality adjustment block 6.

Further, when the video decoder 1 determines that the input signal is a progressive signal, the video decoder 1 outputs the input signal to the selector 5. Then, the selector 5 selects the input signal from the video decoder 1 according to a control signal from the video decoder 1, and outputs the selected signal to the image-quality adjustment block 6. After these operations, the image-quality adjustment block 6 adjusts the image quality of the input progressive signal and outputs that signal externally.

As described above, the video signal processing device 160 eventually outputs an input signal as a progressive signal regardless of whether the input signal is a progressive signal or an interlace signal. In particular, when an input signal is a progressive signal, the video signal processing device 160 outputs the input signal without carrying out any processing because there is no need for any video signal format conversion.

However, various conversion processes may have been already performed on such input progressive signals by external devices such as DVD (Digital Versatile Disc) players and STBs (Set Top Boxes). For example, if a motion adaptive type conversion is applied as an IP conversion, the external device can perform an IP conversion into a progressive signal having the same resolution as that of the original interlace signal for stationary regions. However, the resolution is reduced by half for motion regions. This is caused by the fact that in the motion adaptive type, there are no pixels that can be referred to in terms of time, that is, there are only pixels that can be referred to in terms of space. Therefore, in the motion adaptive type, an IP conversion is performed by generating interpolation lines by referring to the two lines immediately above and below or several lines and applying a low-pass filter. As a result, in the motion adaptive type, the spatial frequency of the interpolation lines becomes lower than that of the original lines, and therefore the quality of the IP conversion deteriorates.

Furthermore, when a progressive signal that is generated by a low-end motion adaptive type IP conversion with low accuracy or an incorrect IP conversion is input to the video signal processing device 160 and output to a display device without carrying out any processing, the lowered resolution and the corrupted portions could remain as they are or further deteriorate in comparison to the original signal.

Meanwhile, Patent document 1 enables an interlace signal on which a process for maintaining the quality is carried out in advance to be converted into a progressive signal. However, it is impossible to carry out the process for maintaining the quality in advance in an external device that cannot be controlled by the video signal processing device 160. Further, there is no guarantee that an identification signal in regard to the IP conversion is always added as described in Patent documents 2 and 3. Therefore, in the video signal processing device 160, it is very difficult to output a progressive signal by processing an input progressive signal while maintaining the quality of the output progressive signal as described above.

A first exemplary aspect of an embodiment of the present invention is a video signal processing device including: a detection unit that detects a conversion history of an input progressive signal; and a signal restoration unit that re-converts the progressive signal according to a detection result detected by the detection unit. In particular, the signal restoration unit includes: a conversion unit that re-convert the input progressive signal; and a selector that selects and outputs a progressive signal re-converted by the conversion unit and the input progressive signal according to a detection result of the detection unit.

Another exemplary aspect of an embodiment of the present invention is a video signal processing method including: detecting a conversion history of an input progressive signal; re-converting the input progressive signal according to a detection result with the detected conversion history; and selecting and outputting either a re-converted progressive signal that re-converted the input progressive signal or the input progressive signal according to the detection result.

In accordance with the above-described video signal processing device and video signal processing method in accordance with an exemplary aspect of the present invention, it is possible, for example, to detect whether any conversion was carried out or what kind of conversion was carried out on the input progressive signal by an external device or the like. Then, if a conversion with poor quality or an incorrect conversion was carried out, an appropriate reconversion can be performed according to the detection result.

The present invention can provide a video signal processing device and a video signal processing method capable, for progressive signals that are input after undergoing various conversion processes, of maintaining the quality of the output progressive signals at a fixed level.

### BRIEF DESCRIPTION OF THE DRAWINGS

The above and other exemplary aspects, advantages and features will be more apparent from the following description of certain exemplary embodiments taken in conjunction with the accompanying drawings, in which:
Fig. 1 is a block diagram illustrating a configuration of a video signal processing device in accordance with a first exemplary embodiment of the present invention;
Fig. 2 is a flowchart showing video signal processing in accordance with a first exemplary embodiment of the present invention;
Fig. 3 is a figure for explaining a signal detection principle in accordance with a first exemplary embodiment of the present invention;
Fig. 4 is a figure for explaining a signal detection principle in accordance with a first exemplary embodiment of the present invention;
Fig. 5 is a figure for explaining a signal detection principle in accordance with a first exemplary embodiment of the present invention;
Fig. 6 is a figure for explaining a signal detection principle in accordance with a first exemplary embodiment of the present invention;
Fig. 7 is a block diagram illustrating a configuration of a video signal processing device in accordance with a second exemplary embodiment of the present invention;
Fig. 8 is a flowchart showing video signal processing in accordance with a second exemplary embodiment of the present invention;
Fig. 9 is a block diagram illustrating a configuration of a video signal processing device in accordance with a third exemplary embodiment of the present invention;
Fig. 10 shows an example of an input signal in accordance with a third exemplary embodiment of the present invention;
Fig. 11 is a figure for explaining a pull-down mode detection principle in accordance with a third exemplary embodiment of the present invention;
Fig. 12 shows an example correspondence between correlation information and a pull-down mode in accordance with a third exemplary embodiment of the present invention;
Fig. 13 is a block diagram illustrating a configuration of a video signal processing device in accordance with a fourth exemplary embodiment of the present invention;
Fig. 14 shows an example of an input signal in accordance with a fourth exemplary embodiment of the present invention;
Fig. 15 is a figure for explaining a pull-down mode detection principle in accordance with a fourth exemplary embodiment of the present invention; and
Fig. 16 is a block diagram illustrating a configuration of a video signal processing device in accordance with the related art.

### DETAILED DESCRIPTION OF THE EXEMPLARY EMBODIMENTS

The first, second, third and forth exemplary embodiments can be combined as desirable by one of ordinary skill in the art.

Specific exemplary embodiments to which an exemplary aspect of the present invention is applied are explained hereinafter in detail with reference to the drawings. The same signs are assigned to the same components throughout the drawings, and duplicated explanation for them is omitted as appropriate for simplifying the explanation.

### [First exemplary embodiment]

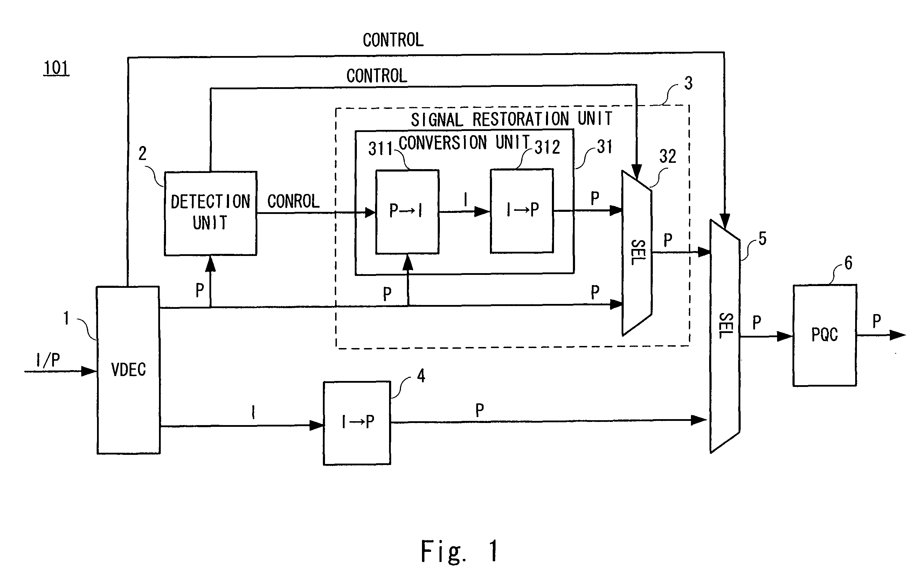

Fig. 1 is a block diagram illustrating a configuration of a video signal processing device 101 in accordance with a first exemplary embodiment of the present invention. Note that since a video decoder 1, an IP conversion unit 4, a selector 5, and an image-quality adjustment block 6 included in the video signal processing device 101 are similar to those shown in Fig. 16, the same signs used for the corresponding components are assigned to these components and their detailed explanation is omitted.

The video signal processing device 101 receives either a progressive signal or an interlace signal, carries out predefined processing, and outputs the signal as a progressive signal. Further, in contrast to the above-described video signal processing device 160, the video signal processing device 101 detects the conversion history of an input signal and re-converts the input signal according to the detection result when the input signal is a progressive signal. Note that the video signal processing device 101 performs similar operations to those of the video signal processing device 160 when the input signal is an interlace signal, and therefore their detailed explanation is omitted.

A detection unit 2 operates when the input signal to the video signal processing device 101 is a progressive signal. The detection unit 2 detects the conversion history of an input progressive signal. In this example, the detection unit 2 detects, as a conversion history, whether the input progressive signal has been converted from an interlace signal or not. That is, the conversion history means information about the conversion processing that was carried out before the input signal is input to the video signal processing device 101.

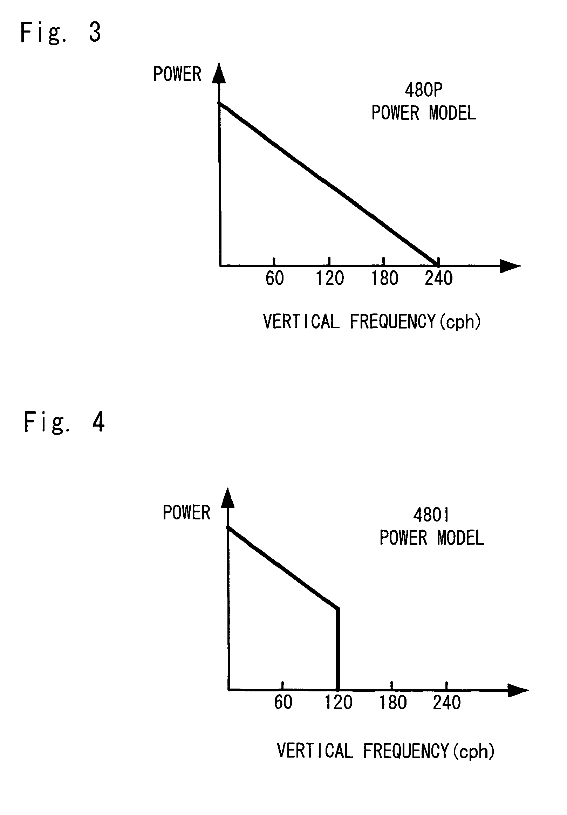

For example, the detection unit 2 analyzes an input progressive signal and specifies either even lines or odd lines as interpolation lines. Then, if the signal strength in those interpolation lines is within the frequency band that can be converted from the interlace signal, the detection unit 2 determines that the input progressive signal has been converted from an interlace signal. Note that a detection principle in the detection unit 2 will be explained later with reference to Figs. 3 to 6.

Then, the detection unit 2 outputs a control signal to a PI (Progressive-Interlace) conversion unit 311 and a selector 32 according to the detection result about the input progressive signal.

A signal restoration unit 3 re-converts the input progressive signal according to the detection result detected by the detection unit 2. The signal restoration unit 3 includes a conversion unit 31 and a selector 32. The conversion unit 31 includes a PI conversion unit 311 and an IP (Interlace-Progressive) conversion unit 312.

The PI conversion unit 311 operates according to a control signal from the detection unit 2, and converts an input progressive signal into an interlace signal. Further, the IP conversion unit 312 re-converts an interlace signal converted by the PI conversion unit 311 into a progressive signal.

The selector 32 selects and outputs a progressive signal re-converted by the conversion unit 31 and an input progressive signal according to the detection result of the detection unit 2.

Note that the detection unit 2 may be configured to output a control signal to the selector 32 so that the selector 32 selects an input progressive signal even when the input progressive signal has been converted from an interlace signal on the condition that the conversion accuracy is determined to be sufficiently high. This is because if the progressive signal has high conversion accuracy at the time of input, high quality can be ensured without performing re-conversion by the conversion unit 31. In this way, processing costs can be reduced.

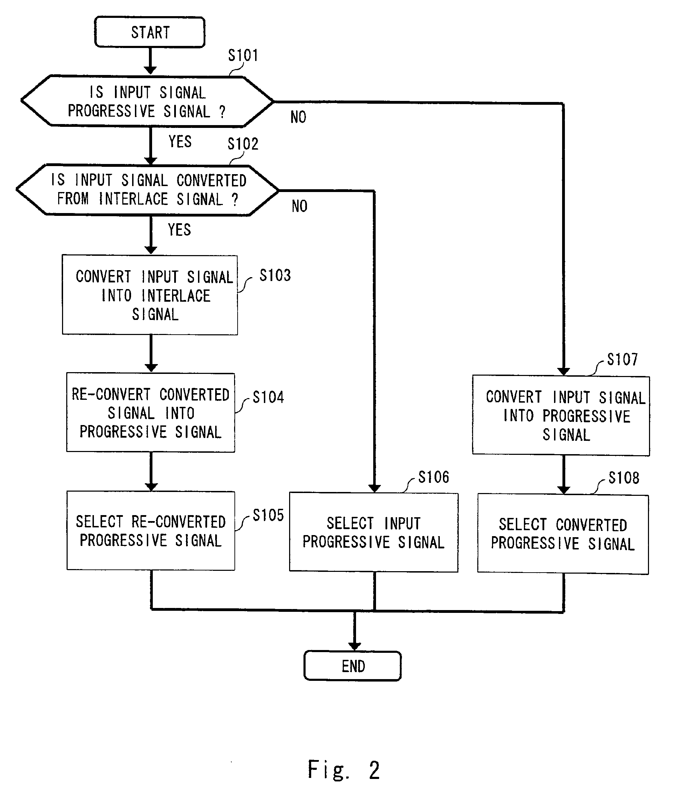

Fig. 2 is a flowchart showing video signal processing in accordance with a first exemplary embodiment of the present invention. Firstly, the video decoder 1 determines whether an input signal is a progressive signal or not (S101). If the input signal is determined to be a progressive signal, the detection unit 2 determines whether the input signal has been converted from an interlace signal or not (S102). At this point, the detection unit 2 outputs a control signal according to the detection result to the PI conversion unit 311 and the selector 32.

If the detection unit 2 determines that the input signal has been converted from an interlace signal, the PI conversion unit 311 receives a control signal indicating the detection result from the detection unit 2 and converts the input signal into an interlace signal (S103). At this point, the PI conversion unit 311 generates an interlace signal by obtaining odd lines or even lines alternately on a frame-by-frame basis from the input signal, i.e., the progressive signal. Note that since known methods can be used as the conversion method from a progressive signal to an interlace signal, its detailed explanation is omitted.

Next, the conversion unit 31 re-converts the interlace signal converted by the PI conversion unit 311 to a progressive signal (S104). Note that the conversion method from an interlace signal to a progressive signal is preferably a high-end motion adaptive type or a motion compensation type. In this way, it is possible to maintain high quality regardless of the degree of accuracy with which the original IP conversion was carried out on the input progressive signal. Note that the motion compensation type, which is one of IP conversion types, enables both stationary regions and motion regions to be restored to progressive video images having high resolution by using motion prediction. Note also that the above-mentioned high-end adaptive type and motion compensation type are commonly known, and therefore their detailed explanation is omitted.

Then, the selector 32 selects the progressive signal re-converted by the IP conversion unit 312 according to a control signal from the detection unit 2 (S105). After that, the selector 5 selects the re-converted progressive signal from the selector 32 according to a control signal from the video decoder 1, and outputs the selected progressive signal to the image-quality adjustment block 6. Further, the image-quality adjustment block 6 performs image quality adjustment and outputs the signal externally.

On the other hand, if the detection unit 2 determines that the input signal is not converted from an interlace signal at the step S102, the selector 32 selects the input progressive signal according to a control signal from the detection unit 2 (S106). After that, similar processes to those at and after the above-described step S 105 are carried out.

Further, if the video decoder 1 determines that the input signal is not a progressive signal at the step S101, the IP conversion unit 4 converts the input signal into a progressive signal (S107). Then, the selector 5 selects the converted progressive signal from the IP conversion unit 4 according to a control signal from the video decoder 1 (S108), and outputs the selected progressive signal to the image-quality adjustment block 6. Further, the image-quality adjustment block 6 performs image quality adjustment and outputs the signal externally.

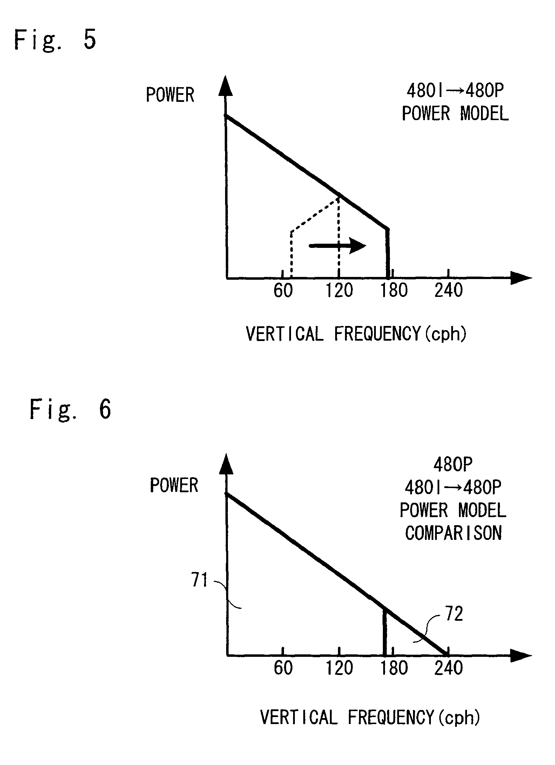

Next, a signal detection principle in accordance a first exemplary embodiment of the present invention is explained hereinafter with reference to Figs. 3 to 6. Figs. 3 to 6 are figures for explaining frequency distributions of an interlace signal, a progressive signal, and an IP conversion output signal in an example of 480 lines per frame, in which the horizontal axes indicate cph (cycle per picture height) and the vertical axes indicate signal strength. Note that Figs. 3 and 5 are drawn by referring to Figure 1 of Non-patent document 1. In the following explanation, a progressive signal of 480 lines per frame is expressed as "480P" and an interlace signal of 240 lines per field is expressed as "480I".

Fig. 3 shows a power model of the 480P. As shown in Fig. 3, the maximum vertical frequency that can be displayed by the 480P is 240 cph. Fig. 4 shows a power model of the 480I. As shown in Fig. 4, the maximum vertical frequency that can be displayed by the 480I is 120 cph. That is, it is a half of the frames of the progressive signal.

Fig. 5 shows a change in a power model that occurs when a conventional IP conversion from the 480I to the 480P is performed. In the conventional IP conversion, the vertical frequency can be restored from 120 cph to 240 cph. As shown in Fig. 5, a range extending from a value slightly higher than 60 cph to 120 cph is folded back at 120 cph to a range extending from 120 cph to a value slightly lower than 180 cph in this example. However, the frequencies that can be restored are changed depending on the quality of the IP conversion. Therefore, the better the accuracy of the IP conversion is, the more frequencies are restored.

Fig. 6 a figure in which the power model of the 480P shown in Fig. 3 is compared with the power model obtained by an IP conversion from the 480I to the 480P shown in Fig. 5. A region 71 is a region indicated by the frequency distribution, i.e., the power model of Fig. 5. A region 72 is a region that is a difference between the region 71 and the power model of Fig. 3. Therefor, the detection unit 2 in accordance with a first exemplary embodiment of the present invention compares the input signal with the region of Fig. 3, and then, if the region 72 emerges as a difference, the detection unit 2 can detect that that input signal has been converted from an interlace signal.

Note that the detection unit 2 in accordance with a first exemplary embodiment of the present invention is not limited to detection in frequency bands in the vertical direction, but may be also applied to detection in the frequency bands in the horizontal direction. Alternatively, the detection unit 2 in accordance with a first exemplary embodiment of the present invention may detect specks or the likes that suddenly appear between a plurality of frames as candidates for corrupted portions, and thereby detecting that a conversion from an interlace signal with low accuracy has been carried out. Note that the detection unit 2 in accordance with a first exemplary embodiment of the present invention is not limited to the above-described configuration, and any other means capable of detecting that a conversion from an interlace signal with low accuracy has been carried out may be also used.

Note also that the IP conversion unit 4 and the IP conversion unit 312 shown in Fig. 1 may be constructed as a single component.

As described above, in a first exemplary embodiment of the present invention, an input progressive signal on which an IP conversion was previously carried out in an external device is detected; the progressive signal is temporarily converted into the original interlace signal; and a re-conversion is performed by a predefined IP conversion. By doing so, it is possible to output the signal as a progressive signal for which at least fixed quality is maintained. Note that by adopting a high-end motion adaptive type conversion or a motion compensation type conversion as the predefined IP conversion, it is possible to maintain high quality. Therefore, when the output progressive signal is displayed by a display device or the like, a stable video picture can be displayed.

### [Second exemplary embodiment]

A video signal processing device 102 in accordance with a second exemplary embodiment of the present invention is modified from the video signal processing device 101 in accordance with a first exemplary embodiment of the present invention in such a manner that the input signal and the re-converted signal are combined based on a confidence coefficient in the IP conversion. In this way, the conversion can be performed with higher accuracy. Note that a confidence coefficient in an IP conversion is a value indicating accuracy with which a progressive signal can be reproduced by performing an IP conversion from an interlace signal to a progressive signal. For example, examples of the confidence coefficient include a ratio between the above-described regions 71 and 72 shown in Fig. 6.

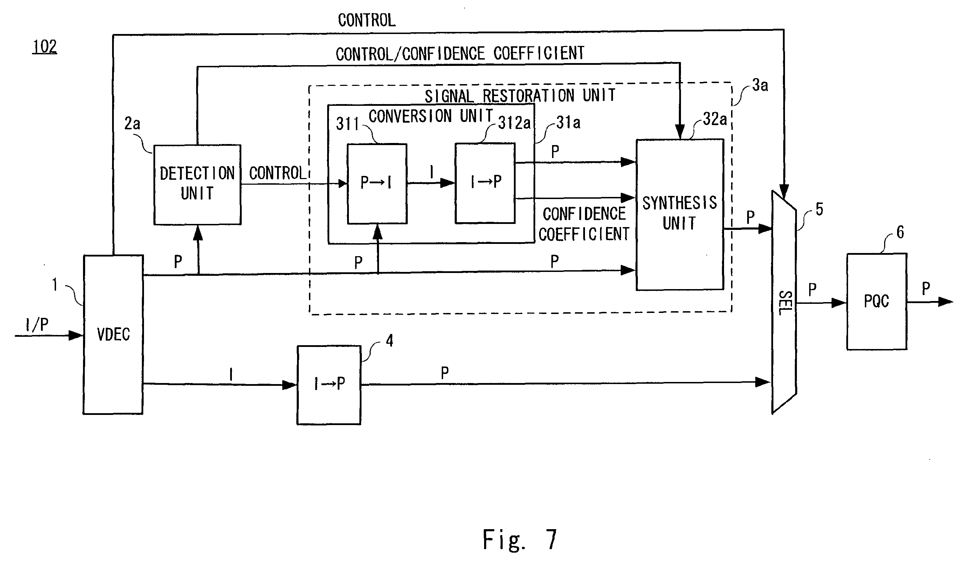

Fig. 7 is a block diagram illustrating a configuration of a video signal processing device 102 in accordance with a second exemplary embodiment of the present invention. The following explanation is made with a particular emphasis on the difference from the configuration of Fig. 1. Further, the same signs are assigned to similar components and structures to those of Fig. 1, and their detailed explanation is omitted.

A detection unit 2a shown in Fig. 7 not only has the equivalent function as the detection unit 2, but also outputs a first confidence coefficient in regard to the conversion of an input progressive signal based on a conversion history to a synthesis unit 32a.

Further, a signal restoration unit 3a includes a conversion unit 31a and a synthesis unit 32a. Furthermore, an IP conversion unit 312a of the conversion unit 31a outputs a second confidence coefficient in regard to the conversion of the re-converted progressive signal to the synthesis unit 32a.

The synthesis unit 32a is a component that is provided in place of the selector 32 of the first exemplary embodiment of the present invention. The synthesis unit 32a combines the input progressive signal with the re-converted progressive signal based on the first confidence coefficient output from the detection unit 2a and the second confidence coefficient output from the IP conversion unit 312a, and outputs the combined progressive signal. For example, the synthesis unit 32a may determine the synthesis ratio according to the ratio of the first and second confidence coefficients.

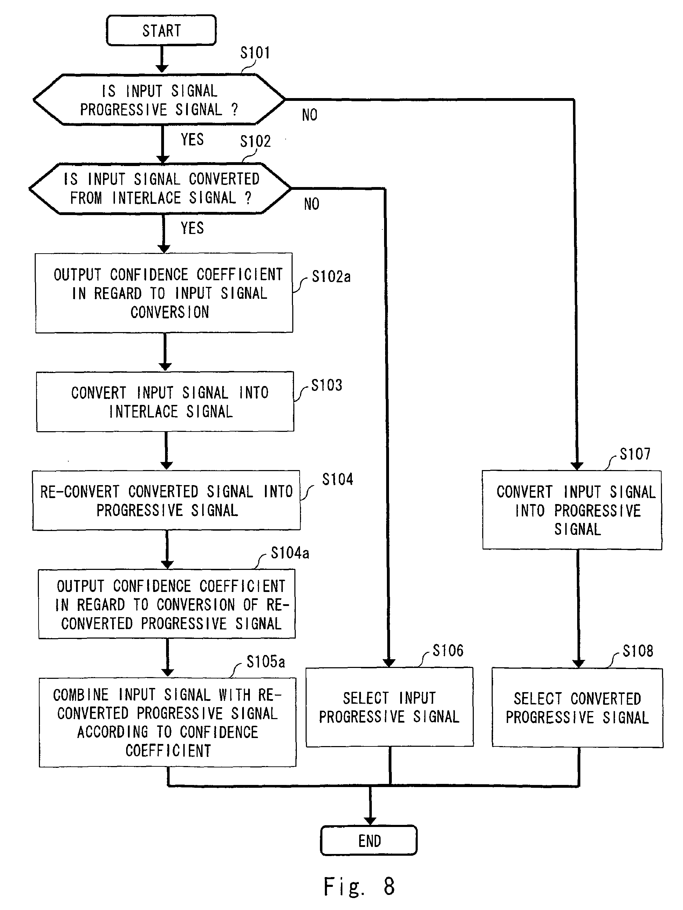

Fig. 8 is a flowchart showing video signal processing in accordance with a second exemplary embodiment of the present invention. The following explanation is made with a particular emphasis on the difference from the configuration of Fig. 2. Further, the same signs are assigned to similar components and structures to those of Fig. 2, and their detailed explanation is omitted.

When the detection unit 2a determines that the input signal has been converted from an interlace signal at the step S102, the detection unit 2a calculates a first confidence coefficient in regard to the input signal and outputs the calculated confidence coefficient to the synthesis unit 32a (S102a). Then, after the step S104, the IP conversion unit 312a calculates a second confidence coefficient in regard to the re-converted progressive signal and outputs the calculated confidence coefficient to the synthesis unit 32a (S104a).

After that, the synthesis unit 32a combines the input progressive signal with the re-converted progressive signal, according to a control signal from the detection unit 2a, based on the ratio between the first and second confidence coefficients (S105a).

Note that the detection unit 2a may be configured to calculate the confidence coefficient in regard to an input signal and output the calculated confidence coefficient to the synthesis unit 32a at the step S102 of Fig. 8 even when the detection unit 2a determines that the input signal is not converted from an interlace signal. In such a case, the synthesis unit 32a may be configured to perform the synthesis while setting the confidence coefficient from the IP conversion unit 312a to zero.

As described above, in a second exemplary embodiment of the present invention, even when the input progressive signal is one that has been generated by performing an IP conversion on an interlace signal, both the signals before and after the re-conversion can be effectively used without entirely replacing the input progressive signal with the re-converted progressive signal by taking an confidence coefficient indicating the accuracy of the IP conversion into account. In particular, when the accuracy of an IP conversion is relatively high at the time of input, the accuracy is never lowered from that level and therefore high quality can be maintained.

### [Third exemplary embodiment]

A third exemplary embodiment of the present invention relates to a video signal processing device in which a progressive signal that has been converted as a result of performing pull-down and reverse pull-down conversions on a film format for a motion picture or the like is input, and the input signal is restored to a progressive signal, which is the film format before the conversion, by performing a re-conversion. Presumptions for the input signal in a third exemplary embodiment of the present invention are explained hereinafter.

The film is video data of 24 frames per second and is a progressive signal. In the following explanation, a video signal in the film format is expressed as "24P". The pull-down conversion is a technique to convert a signal of the 24P into an interlace signal. In particular, the 3:2 pull-down conversion is a technique to convert the 24P into an interlace signal of 60 frames per second, i.e., the 60I NTSC (National Television Standards Committee) format.

In the pull-down conversion, a frame is divided into a top field composed of odd lines and a bottom field composed of even lines. Further, in the 3:2 pull-down conversion, a non-integral multiple conversion from 24P to 60I is implemented by dividing a first frame into three fields, i.e., top, bottom, and top fields and dividing a second frame into two fields, i.e., top and bottom fields.

Further, the reverse pull-down conversion includes two methods. A first reverse pull-down conversion method is to generate a progressive signal of 60P for the above-described interlace signal of 60I. For example, it is possible to realize the 60P by combining the top field and the bottom field of the same frame so that a first frame becomes three frames and a second frame becomes two frames.

A second reverse pull-down conversion method is to restore an interlace signal of 60I to the 24P. For example, it is possible to realize the 24P by making a first frame into one frame and making a second frame into one frame by combining top and bottom fields in a similar manner to the first method.

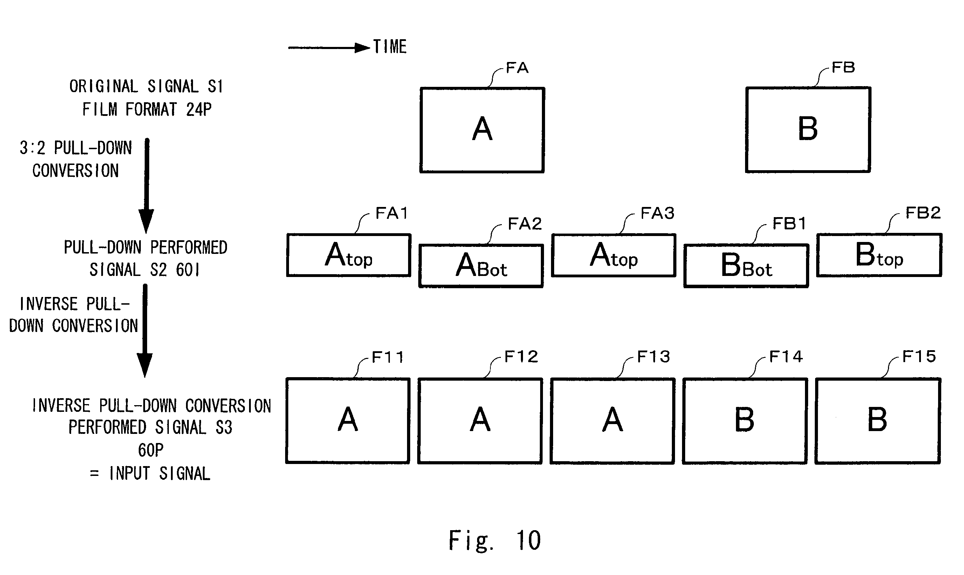

Fig. 10 shows an example of an input signal in accordance with a third exemplary embodiment of the present invention. Suppose that an original signal S1 in a 24P film format has frames called "frame FA" and "frame FB" in the temporal direction. At this point, when the 3:2 pull-down conversion is performed on the original signal S1, a pull-down performed signal S2 of 60I is generated. The pull-down performed signal S2 has a frame FA1, a frame FA2, and a frame FA3 that are a top field, a bottom field, and a top field respectively and generated from the frame FA, and a frame FB1 and a frame FB2 that are a bottom field and a top field respectively and generated from the frame FB.

Next, when a reverse pull-down conversion is performed on the pull-down performed signal S2, a reverse pull-down performed signal S3 of 60P is generated. The reverse pull-down performed signal S3 has a frame F11, a frame F12, and a frame F 13 that are generated from the frames FA1, FA2, and FA3, and a frame F14 and a frame F15 that are generated from the frames FB1 and FB2.

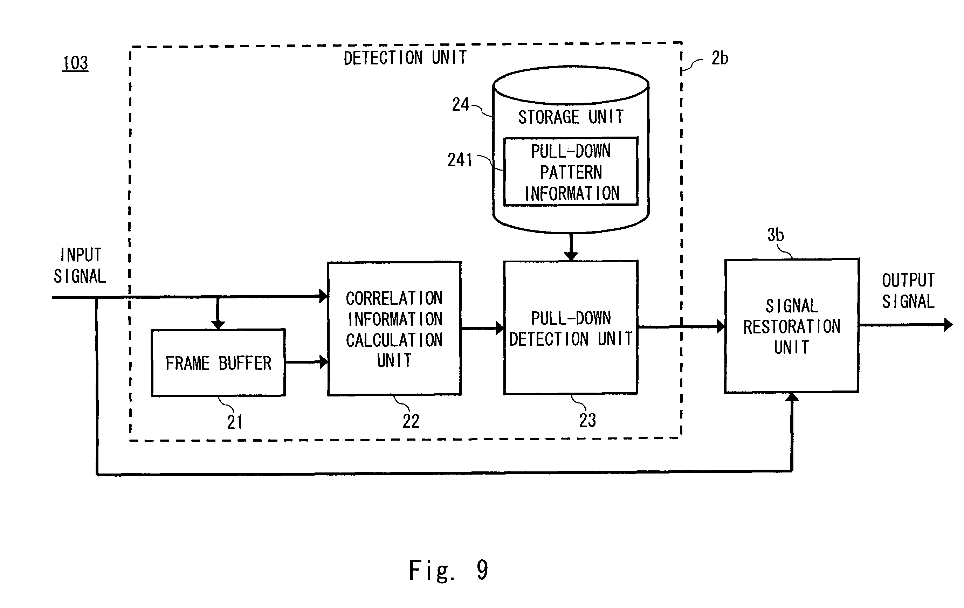

A third exemplary embodiment of the present invention is explained hereinafter on the assumption that the input signal is the reverse pull-down performed signal S3. Fig. 9 is a block diagram illustrating a configuration of a video signal processing device 103 in accordance with a third exemplary embodiment of the present invention. The video signal processing device 103 is modified from the video signal processing device 101 of Fig. 1 by replacing the detection unit 2 and the signal restoration unit 3 with a detection unit 2b and a signal restoration unit 3b, respectively, shown in Fig. 9. Therefore, in Fig. 9, illustration of the configuration corresponding to the configuration other than the detection unit 2 and the signal restoration unit 3 shown in Fig. 1 is omitted. Note that the portions omitted in Fig. 9 may be replaced by other configuration.

The detection unit 2b determines in which one of the predefined pull-down modes an input progressive signal is converted based on correlation information between adjoining frames in the input progressive signal. The detection unit 2b includes a frame buffer 21, a correlation information calculation unit 22, a pull-down detection unit 23, and a storage unit 24.

The frame buffer 21 is a buffer used to delay an input signal by an amount equivalent to one frame. The correlation information calculation unit 22 calculates correlation information between a frame and another frame adjacent to that frame in an input progressive signal. That is, the correlation information calculation unit 22 calculates an inter-frame difference between the input signal and the signal input from the frame buffer 21 that is delayed by one frame. Note that the correlation information is a difference obtained when signals at a common pixel position are compared between frames. For example, the correlation information may be information indicating comparative magnitude. Note also that the correlation information is not limited to this example. For example, it may be a difference value or information indicating ranks that are divided into three or more levels.

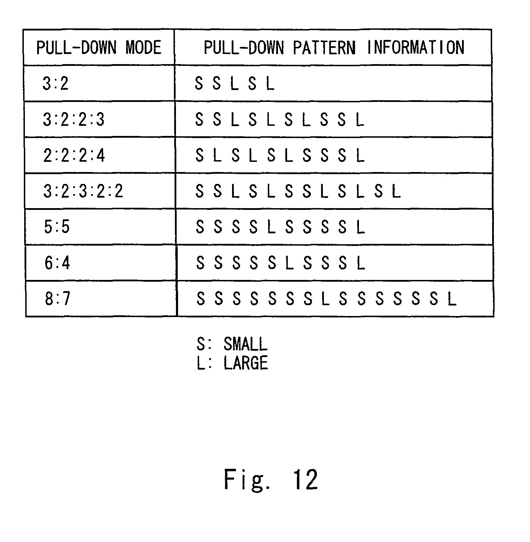

The storage unit 24 is a storage device in which predefined pull-down modes and pull-down pattern information 241 are stored in such a manner that they are associated with each other. The predefined pull-down mode means information indicating the mode of a pull-down conversion. Further, the pull-down pattern information 241 is information indicating a combination of inter-frame correlation information pieces along the temporal direction. Fig. 12 shows an example of correspondences between correlation information pieces and pull-down modes in accordance with a third exemplary embodiment of the present invention. Note that the storage unit 24 may be a nonvolatile storage device such as a hard disk drive and a flash memory, or a volatile storage device such as a DRAM (Dynamic Random Access Memory).

The pull-down detection unit 23 determines in which one of the predefined pull-down modes an input progressive signal is converted based on a combination of correlation information pieces calculated by the correlation information calculation unit 22 along the temporal direction. For example, the pull-down detection unit 23 generates a combination of correlation information pieces by connecting a plurality of temporally consecutive correlation information pieces calculated by the correlation information calculation unit 22. Then, the pull-down detection unit 23 compares a combination of correlation information pieces with pull-down pattern information 241 stored in the storage unit 24 at predefined intervals, i.e., every predefined number of frames. Then, when a match occurs, the pull-down detection unit 23 determines that the input signal has been converted in the pull-down mode associated with that pull-down pattern information 241. Then, the pull-down detection unit 23 outputs information indicating the pull-down mode read from the storage unit 24 to the signal restoration unit 3b as a detection result.

The signal restoration unit 3b re-converts the input progressive signal according to the pull-down mode detected by the detection unit 2b. That is, the signal restoration unit 3b converts the input progressive signal into the 24P film format by performing a reverse pull-down conversion corresponding to the detected pull-down mode, and outputs the converted signal as an output signal.

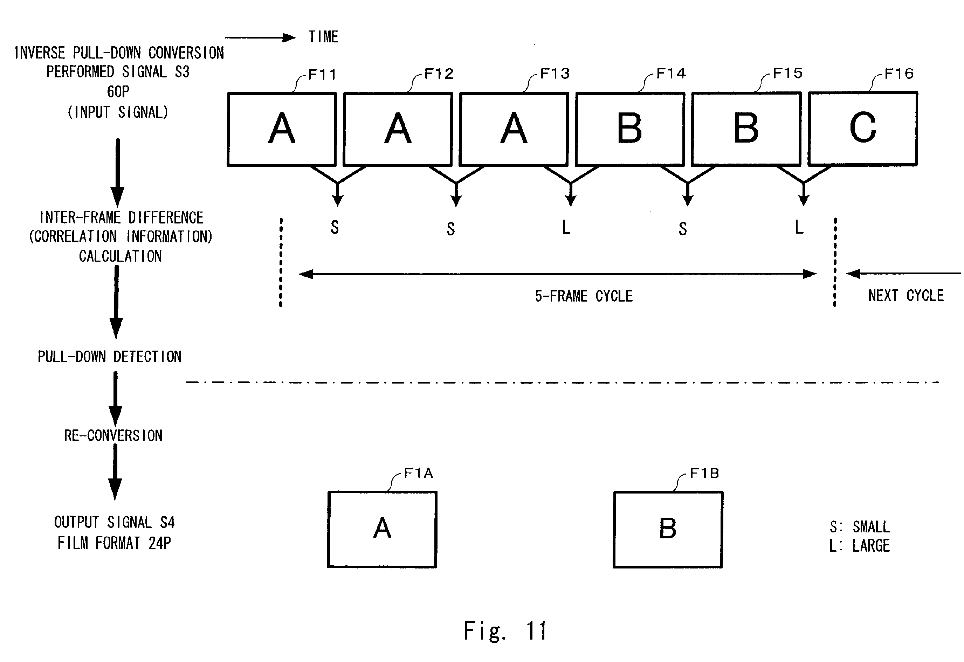

Fig. 11 is a figure for explaining a pull-down mode detection principle in accordance with a third exemplary embodiment of the present invention. The correlation information calculation unit 22 calculates an inter-frame difference in regard to an input progressive signal, i.e., a reverse pull-down performed signal S3 of 60P. In this example, the detection unit 2b calculates, for example, correlation information between a frame F11 and a frame F12 as "small", and correlation information between the frame F12 and a frame F 13 as "small".

Then, the pull-down detection unit 23 connects five correlation information pieces between the frames F11 to F 16 along the temporal direction, and generates a combination of the correlation information pieces as "small small large small large". Next, the pull-down detection unit 23 compares the generated combination "small small large small large" with pull-down pattern information 241 shown in Fig. 12, and determines that the pull-down mode is "3:2".

After that, the signal restoration unit 3b performs the reverse pull-down conversion of the 3:2 pull-down conversion in regard to the frames F11 to F 15, and outputs an output signal S4 of 24P composed of two frames, i.e., frames F1A and F1B.

Note that the video signal processing device 103 may be configured such that when any one of pull-down modes is not detected by the pull-down detection unit 23, the input progressive signal is selected and output by the signal restoration unit 3b without carrying out any processing.

As described above, in the video signal processing device 103 in accordance with a third exemplary embodiment of the present invention, when an reverse pull-down performed signal S3, i.e., a progressive signal that was generated from an original signal S1 in a 24P film format by performing a pull-down conversion and a reverse pull-down conversion by an external device is input, the pull-down mode is precisely detected and a reverse conversion corresponding to the detected 3:2 pull-down conversion is performed. By doing so, an output signal S4 equivalent to the original signal S1 can be output. Therefore, an original input of 60P can be restored as 24P, and therefore the quality can be ensured.

### [Fourth exemplary embodiment]

A video signal processing device 104 in accordance with a fourth exemplary embodiment of the present invention is modified from the video signal processing device 103 in accordance with a third exemplary embodiment of the present invention in such a manner that even when a signal that is incorrectly converted from a signal of 60I is input, the input signal can still be correctly re-converted to the original 24P. Presumptions for an input signal in a fourth exemplary embodiment of the present invention are explained hereinafter.

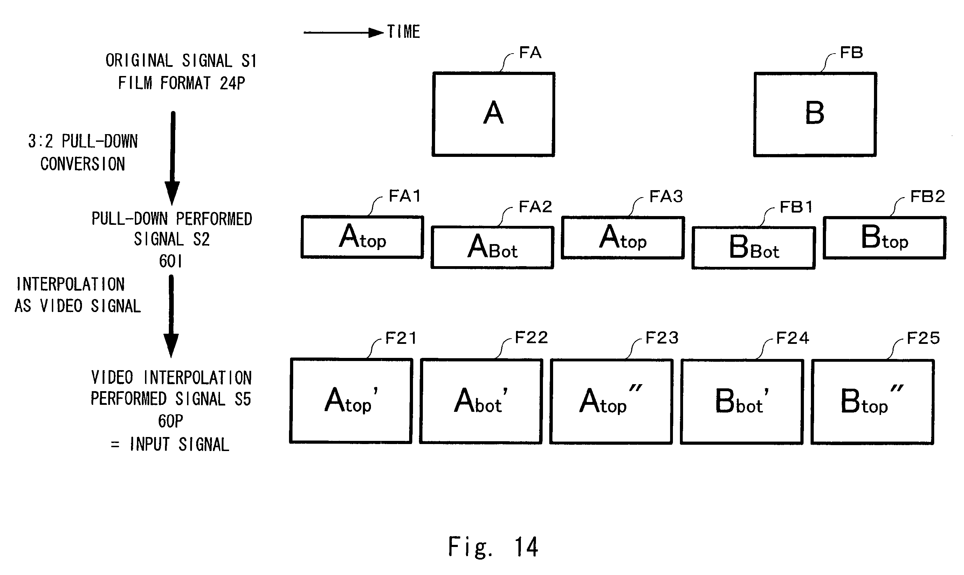

Fig. 14 shows an example of an input signal in accordance with a fourth exemplary embodiment of the present invention. The following explanation is made with a particular emphasis on the difference from the configuration of Fig. 10. Further, the same signs are assigned to similar components and structures to those of Fig. 10, and their detailed explanation is omitted.

In Fig. 14, if interpolation is made on the same pull-down performed signal S2 as that of Fig. 10 while incorrectly assuming the signal as a video signal, a video interpolation performed signal S5 of 60P is generated. For example, a case where a certain external device does not correctly detect that the pull-down performed signal S2 has been generated from an original signal S 1 by performing a 3:2 pull-down conversion and thereby incorrectly performs interpolation as a video signal falls into this category.

In such a case, the external device performs an IP conversion and generates frames F21, F22, F23, F24, and F25 from the frames FA1, FA2, FA3, FB1, and FB2 respectively. Therefore, although the frames F21, F22, and F23 are supposed to be frames containing the same data under normal circumstances, they become frames slightly different from each other in this example. Further, the same holds true for the frames F24 and F25.

Then, if a video interpolation performed signal S5 like this is input to a conventional video signal processing device, it cannot be converted correctly. Therefore, the quality of the output progressive signal deteriorates and the image is not correctly displayed in a display device.

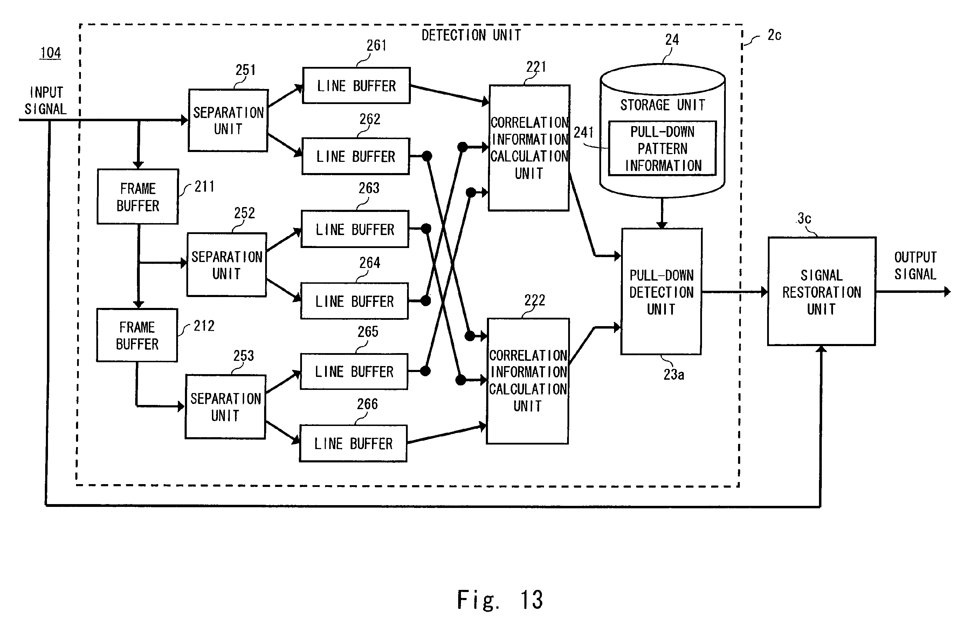

A fourth exemplary embodiment of the present invention is explained hereinafter on the assumption that the input signal is the video interpolation performed signal S5. Fig. 13 is a block diagram illustrating a configuration of a video signal processing device 104 in accordance with a fourth exemplary embodiment of the present invention. The video signal processing device 104 is modified from the video signal processing device 103 of Fig. 9 by replacing the detection unit 2b and the signal restoration unit 3b with a detection unit 2c and a signal restoration unit 3c, respectively, shown in Fig. 13. Therefore, as in the case of Fig. 9, illustration of the configuration corresponding to the configuration other than the detection unit 2 and the signal restoration unit 3 shown in Fig. 1 is omitted in Fig. 13. Note that the portions omitted in Fig. 13 may be replaced by other configuration.

The detection unit 2c includes frame buffers 211 and 212, separation units 251 to 253, line buffers 261 to 266, correlation information calculation units 221 and 222, a pull-down detection unit 23a, and a storage unit 24. Note that the storage unit 24 itself and pull-down pattern information 241 stored in the storage unit 24 are the same as those of the third exemplary embodiment of the present invention, and therefore their explanation is omitted.

Further, although the detection unit 2c is configured to detect a pull-down mode in which three frames are defined as one unit, it is not limited to this configuration. That is, the fourth exemplary embodiment of the present invention is also applicable to other configurations to detect a pull-down mode in which four or more frames are defined as one unit.

Each of the frame buffers 211 and 212 is the same as the frame buffer 21 of Fig. 9, and the buffer 212 receives an input signal stored in the buffer 211.

Each of the separation units 251 to 253 separates an input progressive signal into a top field composed of odd lines and a bottom field composed of even lines every two or more consecutive frames. Further, each of the line buffers 261 to 266 stores either the top field or the bottom field separated by corresponding one of the separation units 251 to 253. In this example, the separation unit 251 separates an input signal, and stores the separated top field and bottom field in the line buffer 261 and line buffer 262 respectively. Further, the separation unit 252 separates a signal from the buffer 211, and stores the separated top field and bottom field in the line buffer 263 and line buffer 264 respectively. Furthermore, the separation unit 253 separates a signal from the buffer 212, and stores the separated top field and bottom field in the line buffer 265 and line buffer 266 respectively.

Each of the correlation information calculation units 221 and 222 extracts a top field and a bottom field alternately every two or more consecutive frames, and thereby generates two groups between the two or more consecutive frames and calculates correlation information between extracted fields for each of the groups.

In this example, the correlation information calculation unit 221 extracts fields from the line buffers 261, 264, and 265, and defines them as a group X. Then, the correlation information calculation unit 221 calculates correlation information between a top field and a bottom field extracted from the line buffers 261 and 264. Further, the correlation information calculation unit 221 also calculates correlation information between a bottom field and a top field extracted from the line buffers 264 and 265.

Meanwhile, the correlation information calculation unit 222 extracts fields from the line buffers 262, 263, and 266, and defines them as a group Y. Then, the correlation information calculation unit 222 calculates correlation information between a bottom field and a top field extracted from the line buffers 262 and 263. Further, the correlation information calculation unit 222 calculates correlation information between a top field and a bottom field extracted from the line buffers 263 and 266.

After that, the correlation information calculation units 221 and 222 outputs calculated correlation information to the pull-down detection unit 23a.

The pull-down detection unit 23a determines in which one of the predefined pull-down modes an input progressive signal is converted based on a combination of correlation information pieces calculated by the correlation information calculation units 221 and 222 for each group along the temporal direction. For example, the pull-down detection unit 23a first attempts to detect a pull-down mode in regard to the group X in a similar manner to the pull-down detection unit 23. Next, the pull-down detection unit 23a attempts to detect a pull-down mode in regard to the group Y in a similar manner. Then, if one of the groups X and Y matches with a pull-down mode and the other of the groups X and Y does not match with any pull-down mode, the pull-down detection unit 23a determines that the input signal has been converted in that matched pull-down mode. Then, the pull-down detection unit 23a outputs information indicating the pull-down mode read from the storage unit 24 and information about the fields of the matched group to the signal restoration unit 3c as a detection result.

Alternatively, the pull-down detection unit 23a may compare combinations of correlation information pieces of the groups X and Y with each other and select one of the groups whose difference is more distinct, and compare a combination of correlation information pieces in the selected group with the pull-down pattern information 241.

The signal restoration unit 3c performs a re-conversion from information about fields obtained from the pull-down detection unit 23a according to the pull-down mode detected by the detection unit 2c. For example, if the group X matches with a pull-down mode in the pull-down detection unit 23a, the signal restoration unit 3c generates a signal of 60P by a reverse pull-down conversion in accordance with the pull-down mode detected as an interlace signal of 60I. Then, the signal restoration unit 3c converts the generated signal of 60P into a 24P film format by performing a reverse pull-down conversion corresponding to the detected pull-down mode, and outputs the converted signal as an output signal.

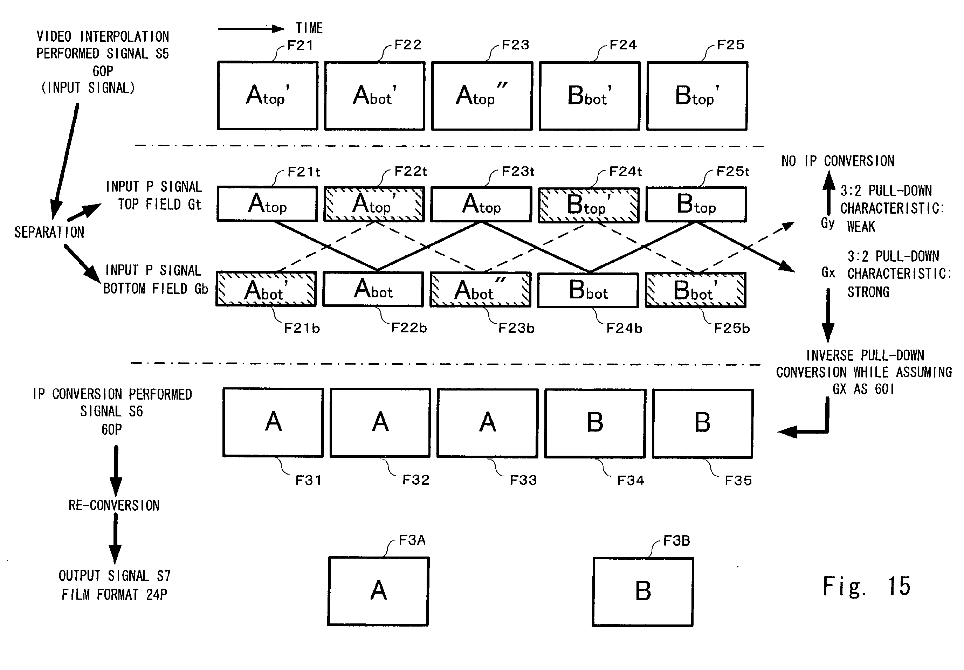

Fig. 15 is a figure for explaining a pull-down mode detection principle in accordance with a fourth exemplary embodiment of the present invention. Note that in this example, an assumption is made that the detection unit 2c is configured to detect a pull-down mode in which five frames are defined as one unit. Firstly, each of the separation unit 251 and the like separates an input progressive signal, i.e., a video interpolation performed signal S5 of 60P into a top field and a bottom field. At this point, for example, the separation unit 251 separates a frame F21, and stores the top and bottom fields, i.e., frames F21t and F21b in the line buffers 261 and 262 respectively. In this way, the top field is composed of frames F22t, ... , F25t obtained from the frames F22, ... , F25 respectively. Further, the bottom field is composed of frames F22b, ... , F25b obtained from the frames F22, ... , F25 respectively.

Next, the correlation information calculation unit 221 extracts information pieces about fields belonging to the group X and defines them as a field information group Gx. In this example, the frames F21t, F22b, F23t, F24b, and F25t belong to the field information group Gx. Next, the correlation information calculation unit 221 calculates correlation information from the field information group Gx. Similarly, the correlation information calculation unit 222 extracts information pieces about fields belonging to the group Y and defines them as a field information group Gy. In this example, the field information group Gy is composed of the frames F21b, F22t, F23b, F24t, and F25b. Further, the correlation information calculation unit 222 calculates correlation information from the field information group Gy.

Then, the pull-down detection unit 23a generates a combination of correlation information pieces and attempts to detect a pull-down mode for each of the field information groups Gx and Gy. In this example, an assumption is made that the field information group Gx corresponds to a 3:2 pull-down mode and the field information group Gy does not correspond to any pull-down mode in the pull-down detection unit 23a. Therefore, the pull-down detection unit 23a determines that the pull-down mode is "3:2".

After that, the signal restoration unit 3c assumes the field information group Gx to be 60I, and generates an IP conversion performed signal S6 of 60P by a reverse pull-down conversion of the 3:2 pull-down conversion. At this point, the IP conversion performed signal S6 is composed of frames F31 to F35. Next, the signal restoration unit 3c outputs an output signal S7 composed of two frames, i.e., frames F3A and F3B in regard to the frames F31 to F35.

As described above, the video signal processing device 104 in accordance with a fourth exemplary embodiment of the present invention can re-convert an input signal that has been incorrectly converted from the 60I into the original 24P correctly. Therefore, a display device can display a high-quality video picture.

### [Other exemplary embodiments]

Furthermore, the present invention is not limited to the above-described exemplary embodiments, and needless to say, various modifications can be made on them without departing from the above-described spirit and scope of the present invention.

While the invention has been described in terms of several exemplary embodiments, those skilled in the art will recognize that the invention can be practiced with various modifications within the spirit and scope of the appended claims and the invention is not limited to the examples described above.

Further, the scope of the claims is not limited by the exemplary embodiments described above.

Furthermore, it is noted that, Applicant's intent is to encompass equivalents of all claim elements, even if amended later during prosecution.

## Claims

1. A video signal processing device comprising:
a detection unit that detects a conversion history of an input progressive signal; and
a signal restoration unit that re-converts the progressive signal according to a detection result detected by the detection unit,
wherein the signal restoration unit comprises:
a conversion unit that re-convert the input progressive signal; and
a selector that selects and outputs either a progressive signal re-converted by the conversion unit or the input progressive signal according to a detection result of the detection unit.

2. The video signal processing device according to Claim 1, wherein
the detection unit detects whether the input progressive signal is converted from an interlace signal, and
when the input progressive signal is converted from the interlace signal, the signal restoration unit converts the input progressive signal into an interlace signal and re-converts the converted interlace signal into a progressive signal.

3. The video signal processing device according to Claim 1 or 2, wherein
the detection unit outputs a first confidence coefficient in regard to the conversion of the input progressive signal based on the conversion history to the selector,
the conversion unit outputs a second confidence coefficient in regard to the conversion of the re-converted progressive signal to the selector, and
the selector combines the input progressive signal with the re-converted progressive signal based on the first and second confidence coefficients and outputs the combined signal.

4. The video signal processing device according to Claim 2 or 3, wherein when the input progressive signal is generated from the interlace signal by performing a conversion with low accuracy, the detection unit determines that the input progressive signal is converted from an interlace signal.

5. The video signal processing device according to any one of Claims 1 to 4, wherein the conversion unit re-converts the input progressive signal by a high-end motion adaptive type or a motion compensation type.

6. The video signal processing device according to Claim 1, wherein
the detection unit detects in which one of predefined pull-down modes the input progressive signal is converted based on correlation information between adjoining frames in the input progressive signal, and
the signal restoration unit re-converts the input progressive signal according to a pull-down mode detected by the detection unit.

7. The video signal processing device according to Claim 6, wherein the detection unit comprises:
correlation information calculation unit that calculates correlation information between a frame and another frame adjacent to that frame in the input progressive signal; and
pull-down detection unit that detects in which one of predefined pull-down modes the input progressive signal is converted based on a combination of correlation information pieces calculated by the correlation information calculation unit along a temporal direction.

8. The video signal processing device according to Claim 7, further comprising a storage unit that stores the predefined pull-down modes and pull-down pattern information in such a manner that they are associated with each other, the pull-down pattern information being information indicating a combination of inter-frame correlation information pieces along a temporal direction.
wherein the pull-down detection unit generates a combination of correlation information pieces by connecting a plurality of temporally consecutive correlation information pieces calculated by the correlation information calculation unit, compares a combination of correlation information pieces with pull-down pattern information stored in the storage unit every predefined number of frames, and when a match occurs, detects that the input signal has been converted in a pull-down mode associated with that pull-down pattern information.

9. The video signal processing device according to Claim 6, wherein the detection unit comprises:
separation unit that separates the input progressive signal into a top field composed of odd lines and a bottom field composed of even lines every two or more consecutive frames,
correlation information calculation unit that extracts the top field and the bottom field alternately every two or more consecutive frames, and thereby generates two groups between the two or more consecutive frames and calculates correlation information between extracted fields for each of those groups, and
pull-down detection unit that detects in which one of predefined pull-down modes the input progressive signal is converted based on a combination of correlation information pieces calculated by the correlation information calculation unit for each of the groups along a temporal direction.

10. The video signal processing device according to Claim 9, wherein if one of the two groups generated by the correlation information calculation unit matches with one of the pull-down modes and the other of the groups does not match with any one of the pull-down modes, the pull-down detection unit detects that the input progressive signal has been converted in the pull-down mode that matches with that one of the groups.

11. The video signal processing device according to Claim 9, wherein the pull-down detection unit compares a combination of correlation information pieces along a temporal direction for each of the two groups generated by the correlation information calculation unit, select one of the groups whose difference is more distinct, and detects in which one of predefined pull-down modes the input progressive signal has been converted from a combination of correlation information pieces in the selected group.

12. A video signal processing method comprising:
detecting a conversion history of an input progressive signal;
re-converting the input progressive signal according to a detection result with the detected conversion history; and
selecting and outputting either a re-converted progressive signal that re-converted the input progressive signal or the input progressive signal according to the detection result.

13. The video signal processing method according to Claim 12, wherein
detecting whether the input progressive signal is converted from an interlace signal, and
when the input progressive signal is converted from the interlace signal, converting the input progressive signal into an interlace signal and re-converting the converted interlace signal into a progressive signal.

14. The video signal processing method according to Claim 12 or 13, further comprising:
outputting a first confidence coefficient in regard to the conversion of the input progressive signal based on the conversion history;
outputting a second confidence coefficient in regard to the conversion of the re-converted progressive signal ; and
combining the input progressive signal with the re-converted progressive signal based on the first and second confidence coefficients and outputting the combined signal.

15. The video signal processing device according to Claim 13 or 14, wherein when the input progressive signal is generated from the interlace signal by performing a conversion with low accuracy, determining that the input progressive signal is converted from an interlace signal.

16. The video signal processing method according to Claim 12, wherein
detecting in which one of predefined pull-down modes the input progressive signal is converted based on correlation information between adjoining frames in the input progressive signal, and
re-converting the input progressive signal according to the detected pull-down mode.

17. The video signal processing method according to Claim 16, wherein
calculating correlation information between a frame and another frame adjacent to that frame in the input progressive signal; and
detecting in which one of predefined pull-down modes the input progressive signal is converted based on a combination of the calculated correlation information pieces along a temporal direction.

18. The video signal processing method according to Claim 16, wherein
separating the input progressive signal into a top field composed of odd lines and a bottom field composed of even lines every two or more consecutive frames,
extracting the top field and the bottom field alternately every two or more consecutive frames, and thereby generating two groups between the two or more consecutive frames and calculating correlation information between extracted fields for each of those groups, and
detecting in which one of predefined pull-down modes the input progressive signal is converted based on a combination of the calculated correlation information pieces for each of the groups along a temporal direction.

19. The video signal processing method according to Claim 18, wherein, if one of the two generated groups matches with one of the pull-down modes and the other of the groups does not match with any one of the pull-down modes, detecting that the input progressive signal has been converted in the pull-down mode that matches with that one of the groups.

20. The video signal processing method according to Claim 18, wherein comparing a combination of correlation information pieces along a temporal direction for each of the two generated groups , selecting one of the groups whose difference is more distinct, and detecting in which one of predefined pull-down modes the input progressive signal has been converted from a combination of correlation information pieces in the selected group.
